# EUROPEAN PATENT APPLICATION

(11) **EP 4 579 475 A1**
(43) Date of publication of application: **02.07.2025**
(21) Application number: 23856523.8
(22) Date of filing: 16.08.2023
(51) Int. Cl.: G06F 16/182, G06F 16/16, G06F 16/18

(54) **DATA PROCESSING METHOD AND APPARATUS**

(30) Priority: 24.08.2022 CN 202211020847
(71) Applicant: Cloud Intelligence Assets Holding (Singapore) Private Limited, Singapore 189554 (SG)
(72) Inventor: DONG, Yuanyuan, Hangzhou, Zhejiang 310030 (CN); ZHUANG, Canwei, Hangzhou, Zhejiang 310030 (CN)
(74) Representative: Barker Brettell LLP
(86) International application number: PCT/CN2023/113372
(87) International publication number: WO 2024/041433

(57) **Abstract**

Embodiments of the specification provide a data processing method and apparatus, where the data processing method includes: receiving a tag operation instruction for a data file, and storing tag operation information associated with the tag operation instruction in an operation log; updating a data operation table associated with the data file according to the tag operation information recorded in the operation log in a case where the operation log meets a log information processing condition; and generating a data operation request corresponding to a target data node based on an updated data operation table, and sending the data operation request to the target data node. The data operation table is updated according to the operation log, thereby determining the target data node according to the data operation table, and executing a tag operation at the target data node, which achieves collaborative processing of the data file based on the tag operation instruction.

## Description

This application claims priority to Chinese patent application No. 202211020847.7, filed to the China National Intellectual Property Administration on August 24, 2022 and entitled "DATA PROCESSING METHOD AND APPARATUS", which is hereby incorporated by reference in its entirety.

### TECHNICAL FIELD

Embodiments of the specification relate to the field of computer technologies and, in particular, to a data processing method.

### BACKGROUND

With the continuous development of Internet technologies, in order to achieve reliable mass data storage, a distributed storage system is now mostly used. The distributed storage system widely adopts a three-replica mechanism, such as a key-value (key-value) distributed storage system, to store data in different locations to improve the reliability of data storage. The current distributed storage system includes a three-layer architecture, that is, a distributed file system at the bottom, a KV storage engine at the middle, and a computing engine layer at the top. In this distributed storage system structure, in order to ensure the reliability of data, data deletion, modification, etc. are all carried out using an append-only (Append-Only) manner. Therefore, in the distributed storage system with a multi-layer architecture, a middle KV class storage engine layer and a bottom stand-alone storage engine layer both use the above manner to process data. When subsequently performing memory release, each layer needs to perform garbage collection processing separately, which leads to greater write amplification, increased garbage data, and thus affects the overall system performance.

Therefore, how to reduce the write amplification generated in the process of garbage collection processing of the distributed storage system, reduce the garbage data, reduce storage cost, and improve the system performance are the urgent problems that need to be solved nowadays.

### SUMMARY

In view of this, embodiments of the specification provide a data processing method. One or more embodiments of the specification also relate to a data processing apparatus, a data processing system, a computing device, a computer readable storage medium, and a computer program, to address the technical deficiency in the prior art.

According to a first aspect, an embodiment of the specification provides a data processing method, including:
receiving a tag operation instruction for a data file, and storing tag operation information associated with the tag operation instruction in an operation log;
updating a data operation table associated with the data file according to the tag operation information recorded in the operation log in a case where the operation log meets a log information processing condition;
generating a data operation request corresponding to a target data node based on an updated data operation table, and sending the data operation request to the target data node.

According to a second aspect, an embodiment of the specification provides a data processing apparatus, including:
a receiving module, configured to receive a tag operation instruction for a data file, and store tag operation information associated with the tag operation instruction in an operation log;
an updating module, configured to update a data operation table associated with the data file according to the tag operation information recorded in the operation log in a case where the operation log meets a log information processing condition;
a sending module, configured to generate a data operation request corresponding to a target data node based on an updated data operation table, and send the data operation request to the target data node.

According to a third aspect, an embodiment of the specification provides a data processing system, including:
a server, configured to receive a tag operation instruction for a data file, and store tag operation information associated with the tag operation instruction in an operation log; update a data operation table associated with the data file according to the tag operation information recorded in the operation log in a case where the operation log meets a log information processing condition; generate a data operation request corresponding to a target data node based on an updated data operation table, and send the data operation request to the target data node;
the target data node, configured to tag a data interval to be operated in a local storage space based on the data operation request, and generate status update information based on the tagging result and send the status update information to the server;
where the server is further configured to receive the operation status information and record the operation status information into the updated data operation table.

According to a fourth aspect, an embodiment of the specification provides a computing device, including:
a memory and a processor;
where the memory is configured to store computer executable instructions, and the processor is configured to execute the computer executable instructions which, when executed by the processor, implement steps of the above data processing method described above.

According to a fifth aspect, an embodiment of the specification provides a computer readable storage medium, where the computer readable storage medium stores computer executable instructions which, when executed by a processor, implement steps of the data processing method described above.

According to a sixth aspect, an embodiment of the specification provides a computer program which, when executed by a computer, causes the computer to execute steps of the data processing method described above.

In the embodiment of the specification, a tag operation instruction for a data file is received, and tag operation information associated with the tag operation instruction is stored in an operation log; a data operation table associated with the data file is updated according to the tag operation information recorded in the operation log in a case where the operation log meets a log information processing condition; a data operation request corresponding to a target data node is generated based on an updated data operation table, and the data operation request is sent to the target data node. The data operation table is updated according to the operation log, thereby determining the target data node according to the data operation table, and executing a tag operation at the target data node, which achieves collaborative processing of the data file based on the tag operation instruction.

### BRIEF DESCRIPTION OF DRAWINGS

FIG. 1 is a schematic structural diagram of a data processing method provided in an embodiment of the specification.
FIG. 2-1 is a flowchart of a data processing method provided in an embodiment of the specification.
FIG. 2-2 is a schematic diagram of a data processing method provided in an embodiment of the specification.
FIG. 3 is a flowchart of a processing procedure of a data processing method provided in an embodiment of the specification.
FIG. 4 is a schematic structural diagram of a data processing apparatus provided in an embodiment of the specification.
FIG. 5 is a schematic structural diagram of a data processing system provided in an embodiment of the specification.
FIG. 6 is a structural block diagram of a computing device provided in an embodiment of the specification.

### DESCRIPTION OF EMBODIMENTS

The following description elaborates on many specific details to facilitate a thorough understanding of the specification. However, the specification can be implemented in many other different ways from those described herein, and those skilled in the art can make similar promotions without violating the content of the specification. Therefore, the specification is not limited by specific implementations disclosed below.

Terms used in one or more embodiments of the specification are for the purpose of describing specific embodiments only and are not intended to limit one or more embodiments of the specification. The singular forms of "a/an", "said", and "the" used in one or more embodiments of the specification and the appended claims are also intended to include the majority, unless the context clearly indicates other meanings. It should also be understood that the term "and/or" used in one or more embodiments of the specification refers to and includes any or all possible combinations of one or more associated listed items.

It should be understood that although the terms first, second, etc., may be used to describe various pieces of information in one or more embodiments of the specification, such information should not be limited to these terms. These terms are only used to distinguish information of the same type from each other. For example, without departing from the scope of one or more embodiments of the specification, the first may also be referred to as the second, and similarly, the second may also be referred to as the first. Depending on the context, the word 'if' used here can be interpreted as "at the time..." or "when..." or "in response to determining...".

First, terminologies involved in one or more embodiments of the specification are explained.

Append-only: only supports append writing, does not support random modification of writing mode.

File: a piece of continuous storage data uniquely identified by a file name or file ID. Each file consists of one or more Chunks.

Chunk: Chunk is a continuous interval of data in a storage file, and each Chunk can be a multi-replica Chunk or an erasure code Chunk.

Replica: Replica is a data block of a piece of continuous data stored by Chunk in a stand-alone storage engine. For multi-replica Chunk, all replicas are the same; and for erasure code Chunk, each replica stores a data shard that meets a split and arrangement rule of the erasure code, and the data of each shard is different.

KV storage engine: refers to an engine built on a distributed file system that stores data in a Key-Value manner and provides access to data in a Key manner.

ZNS-SSD: (Zoned Namespace, zoned namespace) - (Solid State Disk, solid state disk) is developed on the basis of SSD, which realizes a migration of FTL (Flash Translation Layer, flash translation layer) from the internal of the SSD to the upper level Host side, and opens up the internal of the SSD to the Host side, enabling a user to flexibly have his own specific FTL according to his own needs.

In the specification, an information processing method is provided, and the specification also relates to an information processing apparatus, a computing device, an information processing system, a computer readable storage medium, and a computer program, each of which is described in detail in the following embodiments.

At present, a three-layer architecture is widely used in various distributed storage systems such as object storage, file storage, table storage, block storage, as well as a distributed analytical database, a distributed transactional database, and an analytical transactional hybrid database. The bottom layer adopts an Append-Only distributed file system for highly reliable and available persistent storage, while the middle layer adopts various types of KV storage as a row storage engine, a column storage engine, or a row and column hybrid engine. The upper layer is a front-end access layer or a computing engine layer. In this type of architecture, data deletion, modification and update are all implemented by writing logs in an Append-Only manner to fully utilize the access characteristic of the storage medium and improve write throughput capability, and then, in the background GC (garbage collection) process, the physical space of overwritten or deleted data is released. Therefore, in this type of architecture, the optimization for GC of the KV layer is the key technology of this technical architecture and also the direction for continuous optimization and breakthrough by relevant technical personnel.

As the underlying distributed file system increasingly supports a storage medium that only supports Append-Only, such as ZNS-SSD, the stand-alone storage layer of the distributed file system also adopts a KV-like storage structure, and the data deletion, modification and update are implemented by means of an Append-Only writing Log, which relies on the background GC to truly release the physical space of the overwritten or deleted data. Therefore, the way that the intermediate KV class storage engine layer and the underlying distributed file system layer independently perform GC lacks collaboration, which will result in greater write amplification, increased junk data, and thus affect overall system performance, cost, and reduce the competitiveness of the system.

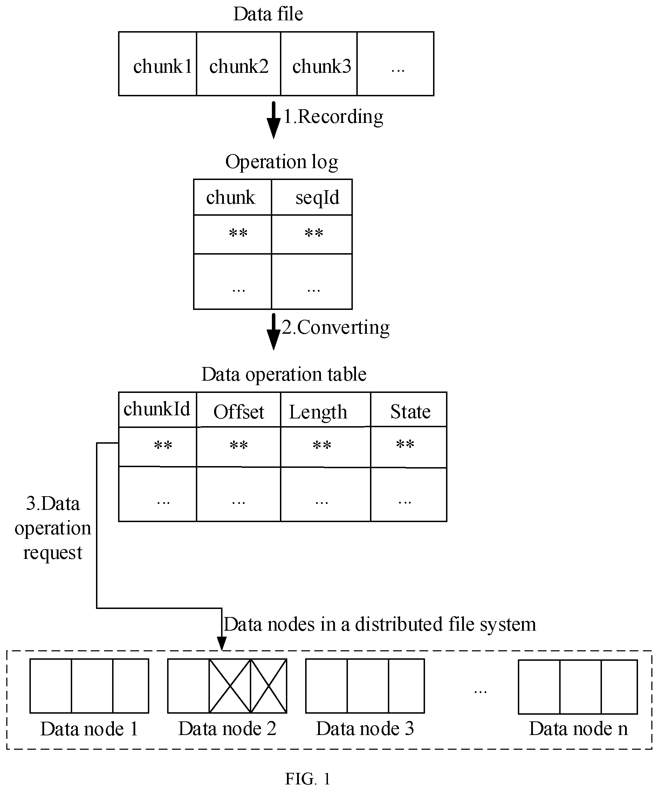

In view of this, referring to the schematic structural diagram shown in FIG. 1. In a distributed file system, when deleting data from a file, the data to be deleted can be tagged; and when writing data to a data file, the data to be written can be written to a storage location of the tagged data to be deleted. Where the operation of tagging the data to be deleted is called as a trim operation. The data file includes multiple continuous data intervals, such as chunk1, chunk2, and chunk3, and each continuous data interval includes a plurality of data blocks (Replicas). When performing the trim operation on data stored in the data file, at least one continuous data interval can be determined in the data file based on the trim operation request, the operation information such as the data interval and seqId associated with the trim operation can be recorded in the operation log, where seqId is a self-increasing ID in the operation log, for each piece of log information written to the operation log, a seqId is assigned to the log information. When the trim operation is performed, the log information recorded in the operation log is read, the read log information is converted into a piece of tag operation information in the data operation table, the data operation table is updated, that is, the tag operation information such as offset (Offset) and length (Length) corresponding to chunkId is written into the data operation table. A corresponding data node in the distributed file system can be determined according to a piece of tag operation information stored in the data operation table, and the data operation request can be sent to the data node, and the data node executes the trim operation.

In the Append-Only distributed file system, a Trim interface has also been added to provide support of strong data consistency. The Trim interface includes: key information such as the unique identifier fileId of the data file, the offset (offset) within the file, the length (length) of the Trim, and other interface parameters. The Trim interface of the distributed file system is called for data that is no longer needed; if the Trim interface is called, after the Trim call returns success, when the business reads the data after the Trim, it returns 0, indicating that the data has completed the trim operation and cannot be read; and if the Trim interface is called, after the Trim call returns failure, it indicates that the data has not completed the trim operation, and when reading the data after the Trim, the original data before the Trim is returned. In addition, for the trim operation, a log file has been added. After the trim operation is successfully recorded in the log file, the trim call being success will be returned. If the trim operation is not successfully recorded in the log file, the trim call being failure will be returned.

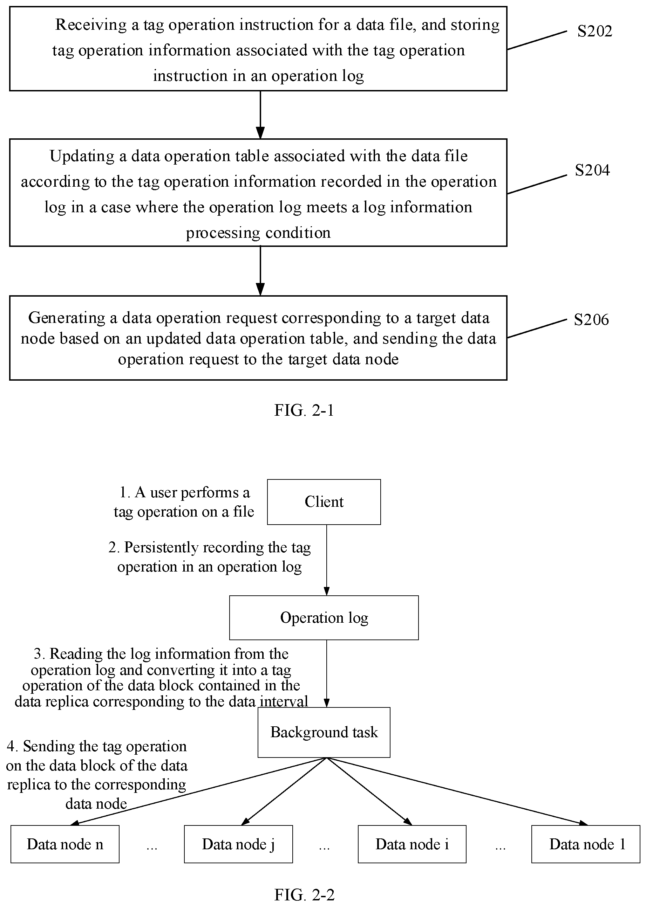

Referring to FIG. 2-1, which shows a flowchart of a data processing method provided in an embodiment of the specification. The method is applied to the server and specifically includes the following steps.

Step S202, receiving a tag operation instruction for a data file, and storing tag operation information associated with the tag operation instruction in an operation log.

Specifically, the data file is a type of file in the computer system that can be used to store various types of data. In the distributed file system, the data file has a file identifier and is composed of one or more data intervals, each of the data intervals includes a plurality of data blocks. The tag operation instruction refers to a computer instruction used to perform a tag operation on data in the data file. The tag operation instruction usually carries tag operation information, where the tag operation information includes information of the data interval that needs to be tagged, as well as the serial number (ID), in the operation log, used to store the tag operation information. The operation log is used to record the tag operation information.

Based on this, in the distributed file system, the data file can be tagged. After receiving a tag operation instruction for the data file, the tag operation information associated with the tag operation instruction can be determined according to the data file information carried in the tag operation instruction. The tag operation information can be stored in the operation log associated with the data file, so as to facilitate the subsequent tag operation processing for the data file based on the tag operation information stored in the operation log.

For example, in a scenario where order information "a" of a user A stored in the distributed file system is deleted, since order information "a" of the user A may be stored in the form of multi-replica storage in the data file contained in the distributed file system, when performing a data tag operation, the data contained in multiple replicas can be tagged, i.e., the order information "a" is split into three data components, such as data 1, data 2, and data 3, which are respectively stored in three different continuous data intervals of the data file. Therefore, after receiving the deletion instruction for the order information "a" of the user A, the data interval information related to the order information "a" of the user A can be stored in the operation log, waiting for the deletion process on the order information "a" of the user A.

Furthermore, when storing the tag operation information in the operation log, the tag operation information can be stored in an operation log that has a unique corresponding relationship with the data file, or the tag operation information can also be stored in an operation log used to store tag operation information corresponding to a plurality of data files. The specific implementation is as follows:
storing the tag operation information associated with the tag operation instruction in an operation log associated with the data file, where the operation log is created according to a historical operation instruction of the data file; or, using a target operation log associated with the data file as the operation log, and storing the tag operation information associated with the tag operation instruction in the operation log, where the target operation log is used to store tag operation information associated with at least two data files.

Specifically, the historical operation instruction refers to a computer instruction used to store operation information in the operation log before storing the tag operation information in the operation log. The target operation log refers to an operation log that is associated with at least two data files, that is, based on the tag operation instructions submitted by each data file in at least two data files, and tag operation information corresponding to the operation instructions all be stored in the target operation log.

Based on this, when storing the tag operation information in an operation log, the tag operation information can be stored in an operation log that has a unique corresponding relationship with the data file, or the tag operation information can also be stored in an operation log used to store tag operation information corresponding to a plurality of data files. When receiving a tag operation instruction, the tag operation information associated with the tag operation instruction can be stored in the operation log associated with the data file. The operation log can be created according to the historical operation instruction of the data file. When there is no operation log associated with the data file, an operation log corresponding to the data file can be created and the tag operation information can be stored in the operation log; and the target operation log associated with the data file can also be used as the operation log, and the tag operation information associated with the tag operation instruction can be stored in the operation log. The target operation log is used to store tag operation information associated with at least two data files.

In a specific implementation, when storing the tag operation information corresponding to the data file in the operation log, a unique operation log corresponding to the data file can be determined, and the data file can be stored in the determined operation log. When there is no operation log corresponding to the data file, an operation log can be created for the data file, and the tag operation information corresponding to the data file can be stored in the created operation log; and multiple data files can also share one operation log, by using a many-to-one manner, the tag operation information corresponding to the multiple data files is stored in one operation log, thereby improving the utilization rate of the operation log.

Following the previous example, when storing the data interval information related to the order information "a" of the user A in the operation log, different operation logs can be written according to the different data files corresponding to the order information "a" of the user A. In a practical application, the log information corresponding to the deletion instruction submitted for the data file A can be stored in the operation log A uniquely corresponding to the data file A. The log information corresponding to the deletion instruction submitted for the data file A can also be stored in an operation log B, where the operation log B is used to store the log information corresponding to the multiple data files such as the data file A, the data file B, and a data file C.

In conclusion, when storing the tag operation information in the operation log, the tag operation information can be stored in an operation log that has a unique corresponding relationship with the data file, or the tag operation information can also be stored in an operation log used to store tag operation information corresponding to a plurality of data files, thereby improving the flexibility of the storage of the tag operation information.

Step S204, updating a data operation table associated with the data file according to the tag operation information recorded in the operation log in a case where the operation log meets a log information processing condition.

Specifically, after storing the tag operation information associated with the tag operation instruction in the operation log, the tag operation information recorded in the operation log can be processed in a case where the operation log meets the log information processing condition. Where the log information processing condition refers to a preset condition used to determine whether the tag operation information stored in the operation log can be processed. In the present embodiment, the log information processing condition includes: it is determined that the operation log meets the log information processing condition when the number of the tag operation information stored in the operation log reaches a set quantity threshold; a preset log processing cycle, it is determined that the operation log meets the log information processing condition when the preset log processing cycle is reached. The data operation table is used to store relevant information of the data to be processed corresponding to the data file, including but not limited to data interval information, offset address information, length information, processing status information, etc.

Based on this, the judgment whether the operation log meets the log information processing condition is made from multiple dimensions such as the log processing cycle and the amount of information in the log. In a case where the operation log meets the log information processing condition, the tag operation information stored in the operation log is read, the data operation table associated with the data file is updated according to the tag operation information recorded in the operation log that is read, and the data associated with the tag operation information is recorded in the data operation table.

Following the previous example, when the number of log information recorded in the operation log reaches the preset quantity threshold of 20, it is determined that the operation log meets the log information processing condition, it is read the log information from the operation log in an order in which the log information is written, it is deleted the log information corresponding to the order information "a" of the user A: data interval 1 - data 1; and according to the "data interval 1 - data 1" recorded in the log information, it is generated a record in the data operation table: data interval 1 - offset 1 - length 1 - status null; and this record is stored in the data operation table corresponding to the data file.

Furthermore, after storing the tag operation information associated with the tag operation instruction in the operation log, the data operation table associated with the data file can be updated according to the tag operation information stored in the operation log. The specific implementation is as follows:
reading the tag operation information recorded in the operation log, and determining data interval information associated with the data file according to the tag operation information, where the data interval information is associated with a data interval contained in the data file; and determining data block operation information according to the data interval information, and updating the data operation table associated with the data file according to the data block operation information.

Specifically, the data interval information refers to interval information corresponding to a data interval contained in the data file, where the data file contains at least one continuous data interval, and the tag operation information stored in the operation log contains data interval information; and a continuous data interval corresponds to a plurality of data blocks; correspondingly, the data block operation information refers to operation information associated with the data to be deleted, including but not limited to an offset address, a length, and operation status corresponding to the data block.

Based on this, in a case where the tag operation information associated with the tag operation instruction is stored in the operation log and the operation log meets the log information processing condition, the tag operation information recorded in the operation log is read. The data interval information associated with the data file is determined according to the data interval associated with the tag operation information. The data block operation information corresponding to the tag operation instruction is determined according to the data interval information, and the data operation table associated with the data file is updated according to the data block operation information.

Following the previous example, after determining the log information recorded in the operation log: data interval 1-data 1; a storage location of data 1 in data interval 1 is determined according to the data interval 1, and it is determined relevant information of the data block corresponding to the log information: data interval 1-offset 1-length 1-status null; and this information is recorded in the data operation table.

In conclusion, through reading the tag operation information, the data interval information associated with the tag operation information is determined, and then the data operation table is updated according to the data interval information associated with the tag operation information, thereby achieving the collaborative operation of the operation log and the data operation table.

Furthermore, after storing the tag operation information associated with the tag operation instruction in the operation log and realizing the addition of new tag operation information to the operation log, the newly added tag operation information can be processed; and the log information contained in the operation log can also be queried in accordance with a preset log query cycle, and the newly added tag operation information queried can be processed. The specific implementation is as follows:
in a case where the tag operation information is newly added to the operation log, determining that the operation log meets the log information processing condition, and performing a step of updating the data operation table associated with the data file according to the tag operation information recorded in the operation log; or, querying log information contained in the operation log according to a preset log query cycle, in a case where it is determined, according to a query result, that the tag operation information is a newly added tag operation information, determining that the operation log meets the log information processing condition, and performing a step of updating the data operation table associated with the data file according to the tag operation information recorded in the operation log.

Specifically, the preset log query cycle refers to a preset query cycle for the operation log, and the operation log is periodically queried in accordance with the preset log query cycle, thereby determining the tag operation information that needs to be processed in the operation log, and processing the tag operation information.

Based on this, after storing the tag operation information associated with the tag operation instruction in the operation log, it is determined that the tag operation information has been newly added to the operation log, at which time it is determined that the operation log meets the log information processing condition, and it is performed a step of updating the data operation table associated with the data file according to the tag operation information recorded in the operation log; or, after storing the tag operation information associated with the tag operation instruction in the operation log, it periodically queries the log information contained in the operation log in accordance with the preset log query cycle, in a case where it is determined that the tag operation information is newly added tag operation information according to the query result, it is determined that the operation log meets the log information processing condition, and it is performed a step of updating the data operation table associated with the data file according to the tag operation information recorded in the operation log.

Following the above example, the operation log corresponding to a data file A records the log information corresponding to the order information "a" of the user A to be deleted, such as data interval 1 - data 1, data interval 2 - data 2, data interval 3 - data 3. In addition, the processing status of each log information in the operation log may also be recorded. When the processing of the log information data interval 1 - data 1 is completed, it will be tagged as "Completed". Therefore, in the processing of log information in the operation log, a piece of log information can be newly added in the operation log: data interval 3 - data 3, and this log information will be processed; it is also possible to set a query cycle of 10 minutes for the log, querying the operation log every 10 minutes, and process the log information when it is queried that log information (data interval 1 - data 4) has been newly added to the operation log.

In conclusion, tag operation information is newly added to the operation log, and the operation log is periodically queried according to the preset log query cycle; it is determined that the operation log meets the log information processing condition when obtaining the query results, that is, the data operation table associated with the data file can be updated according to the tag operation information recorded in the operation log, thereby improving the flexibility of processing the operation log.

Step S206, generating a data operation request corresponding to a target data node based on an updated data operation table, and sending the data operation request to the target data node.

Specifically, after updating the data operation table associated with the data file according to the tag operation information recorded in the operation log, a data operation request corresponding to the target data node can be generated according to the information recorded in the data operation table, and the data operation request can be sent to the target data node. Where the target data node refers to a node used to store data in the data file. In this embodiment, the target data node can be a stand-alone storage engine, and a data tag operation is executed by the target data node; and the data operation request refers to a request submitted for the target data node, which is used to inform the target data node to perform a tag operation on the data.

Based on this, after updating the data operation table associated with the data file according to the tag operation information recorded in the operation log, a data operation request corresponding to the target data node can be generated based on the updated data operation table, and the data operation request can be sent to the target data node. After receiving the data operation request from the target data node, the data stored in the data node is tagged.

Following the previous example, after updating the data operation table by recording the relevant information of the data block corresponding to the log information (data interval 1-offset 1-length 1-status null) in the data operation table, record 1 stored in the data operation table: data interval 1-offset 1-length 1- status null is read, a data deletion request is generated based on this record and sent to a plurality of data nodes in the distributed file system corresponding to data interval 1, where the plurality of data nodes include a master data node and a plurality of replica data nodes. The data node performs a deletion operation on the data in the data block corresponding to record 1. It should be noted that the deletion operation performed on the data in the data block is only tagging the data, not deleting the data from the data block, and the tagging the data indicates that, when there is other data to be stored, it can be stored to a storage location corresponding to the tagged data.

Furthermore, after updating the data operation table, the data operation request can be generated according to the data block operation information stored in the data operation table, and the data operation request can be sent to the target data node corresponding to the data block, and the target data node executes the tag operation. The specific implementation is as follows:
reading the data block operation information from the updated data table; and generating the data operation request corresponding to the target data node according to the physical address information contained in the data block operation information, where the data operation request is associated with a data block of the data file, and the data block is stored in the target data node.

Specifically, the data block operation information refers to descriptive information recorded in the data operation table and used to process the data to be deleted, where the descriptive information includes data interval information, and offset address, offset length and processing status information associated with the data interval information. Where the offset address information and the offset length are physical address information used to determine the data block and data to be deleted in the target data node.

Based on this, after updating the data operation table according to the log information recorded in the operation log, the recorded data block operation information can be read from the updated data table. A target data node is determined in the data node contained in the distributed file system according to the physical address information contained in the read data block operation information, the data operation request corresponding to the target data node is generated, the data operation request associates with the data block in the data file, and the data block is stored in the target data node. Subsequently, the data operation request will be sent to the target data node, and the target data node will perform a tag operation on the data stored in the data block.

Following the previous example, record 1 stored in the data operation table: data interval 1-offset 1-length 1-status null is read. A data deletion request for the data block in data node 1 is generated according to the physical address information offset 1-length 1, and the data deletion request is sent to a master data node 10, a replica data node 21 and a replica data node 22 corresponding to the order information "a" of the user Ain the data node contained in the distributed file system. The data deletion request is sent to each data node, separately, and each data node performs the data deletion operation to complete tagging the data stored in the data block contained in the data node.

In conclusion, through reading the physical address information contained in the data block operation information, the data operation request corresponding to the target data node is generated, and then the data operation request is sent to the target data node, thereby improving the accuracy of the determination of the target data node.

Furthermore, after sending the data operation request to the target data node, the data operation request can be executed by the target data node, and then the execution result is obtained, considering that the target data node may fail to execute the data operation request, in order to be able to record the data operation situation in real time, the operation status information can be generated according to the execution result and recorded in the data operation table. The specific implementation is as follows:
determining operation status information based on an execution result of the target data node executing the data operation request, and recording the operation status information in an updated data operation table.

Specifically, after sending the data operation request to the target data node as described above, the target data node can execute the data operation request, and then the execution result is obtained. The data operation table is recorded according to the execution result, where the operation status information refers to an execution status corresponding to the tag operation information stored in the data operation table, including execution success and execution failure. In a case that the target data node executes the tag operation successfully, the status information corresponding to the corresponding tag operation information in the data operation table is recorded as the execution success; and in a case that the target data node fails to execute the tag operation, the status information corresponding to the corresponding tag operation information in the data operation table is recorded as the execution failure.

Based on this, after receiving the data operation request, the target data node executes the data operation request, the execution result corresponding to the data operation request is obtained, the operation status information used to update the data operation table is determined based on the execution result, and the operation status information is recorded in the updated data operation table, so as to update the operation status corresponding to the tag operation information in the data operation table.

Following the above example, after the master data node 10 and the replica data node 21 and the replica data node 22 have all completed the data tag operations and the operations are successful, record 1 of the data operation table is updated, i.e., the record 1 stored in the data operation table: data interval 1-offset 1-length 1-status null is updated to as "data interval 1-offset 1-length 1 - tag success"; and in a case that the operation is failure, record 1 of the data operation table is updated, i.e., the record 1 stored in the data operation table: data interval 1 - offset 1 - length 1 - status null is updated to as "data interval 1 - offset 1 - length 1 - tag failure".

In conclusion, the data operation request is executed by the target data node, thereby completing the operation of the data, and the execution result is recorded in the data operation table in the form of operation status information, so as to facilitate generating the data operation request based on the data operation table again in a case that the execution of the data operation request fails, thereby ensuring that the data can be operated successfully through retrying after failure.

Furthermore, when the target data node executes a data tag operation request, or after completing the data tag operation, the data stored in the data file can be read. When receiving the data read request for the data file, the data operation table can be queried according to the data read request, and the feedback result corresponding to the data read request can be determined according to the query result. The specific implementation is as follows:
receiving a data read request of the data file; querying the data operation table based on the data read request; and determining a feedback result corresponding to the data read request according to a query result.

Specifically, the data read request refers to a computer instruction used to read data stored in the data file. The feedback result refers to a data read result corresponding to the data read request, and the data to be read may be in an unreadable or readable status. In a case that, for the data to be read, the tag operation has been completed, the tag operation is in progress, or the tag operation has failed, the data to be read is in an unreadable status, and the data reading cannot be performed. In a case that, for the data to be read, no tag operation is performed, it means that there is no log information associated with the data to be read in the operation log, and at this time, the data to be read is in a readable status, and the feedback result is the data read.

Based on this, when performing the tag operation on the data file, the data reading can also be performed on the data file; and when receiving the data read request for the data file, the data operation table is queried based on the data read request, and the feedback result corresponding to the data read request is determined according to the operation status information in the data operation table.

Following the previous example, when querying order information "b" of user B, a data read request is submitted for a data file A that stores the order information "b", a data operation table A associated with the data file A is queried, and the read result is determined according to the record information of the data to be read in the data operation table A.

In conclusion, when reading data stored in the data file, the feedback result is determined according to the status information recorded in the data operation table, so as to feedback data corresponding to the data read request, which ensures timely response to the data read request.

Furthermore, when reading data stored in the data file based on the data read request, due to the different operation statuses of the tag operation information recorded in the data operation table, different data read results will be fed back for the data read request. The specific implementation is as follows:
in a case where it is determined, according to the query result, that the data operation table contains tag operation information corresponding to the data read request, generating prompt information and taking the prompt information as the feedback result, where the prompt information indicates that data to be read corresponding to the data read request is in an unreadable status; and in a case where it is determined, according to the query result, that the data operation table does not contain tag operation information corresponding to the data read request, sending a node data read request to a data node corresponding to the data read request, and taking original data feedback from the data node in response to the data read request as the feedback result.

Specifically, the prompt information refers to information fed back based on the data read request and used to prompt an operator performing the data reading that the current data to be read is in an unreadable status, and the prompt information may be a textual prompt, or may be fed back the number 0 to indicate that the data reading has failed. The node data read request is used to read the data to be read stored in the data node. The original data refers to the data in the data node that has not been successfully tagged.

Based on this, the data operation table is queried according to the data read request, in a case where the tag operation information corresponding to the data read request is found in the data operation table, it indicates that the data to be read corresponding to the data read request is in a status of being tagged, or a status of tag completion, or a status of starting to be tagged. In a case where the data to be read is in any one of the statuses, even if the data to be read is failed to be tagged, the data to be read that failed to be tagged will still be re-tagged until the data to be read is successfully tagged, i.e., the data to be read in any status will be successfully tagged. Therefore, when the data read request is received, if the tag operation information corresponding to the data read request is stored in the data operation table, it can be determined that the data to be read is in an unreadable status, and the prompt information can be generated according to the data to be read being in an unreadable status, and the prompt information can be used as the feedback result corresponding to the data read request. In a case where the data operation table is queried according to the data read request and the tag operation information corresponding to the data read request is not queried in the data operation table, it is indicated that the data to be read corresponding to the data read request is in a readable status, a node data read request is sent to the data node corresponding to the data read request, and the original data fed back by the data node for the data read request is used as the feedback result corresponding to the data read request.

Following the previous example, when querying the order information "b" of the user B, a data read request is submitted for the data file A that stores the order information "b", the data operation table A associated with the data file A is queried, In a case where the data corresponding to the order information "b" is recorded in the data operation table A, it means that the data corresponding to the order information "b" has been deleted by the data node corresponding to the order information "b", or the deletion operation is being executed, or the deletion operation is started to execute, the data is in an unreadable status at this time, and the prompt information such as "Reading failure" or "Data unreadable" is fed back, or the number 0 indicates that the data reading has failed is fed back. In a case where the order information "b" is not recorded in the data operation table A, it means that the data corresponding to order information "b" has not been deleted by the data node corresponding to order information "b", the data is in a readable status at this time, and the original data stored in the data node corresponding to the order information "b" is fed back by the data node corresponding to the data.

In conclusion, when the data read request is received, different feedback information is determined according to the different operation statuses corresponding to the tag operation information in the data operation table, and the prompt information is fed back when the data to be read is in an unreadable status; and when the original data stored in the data node fails to perform the tag operation, the original data is fed back, thereby improving the timeliness of data feedback.

Furthermore, the data file is associated with a plurality of data nodes, and in the determination of the target data node, a first data node may be determined among the data nodes contained in the distributed file system according to a file identifier of the data file, and then a second data node associated with the first data node may be determined among the data nodes contained in the distributed file system. The specific implementation is as follows:
determining a file identifier corresponding to the data file, determining a first data node among data nodes contained in a distributed file system according to the file identifier, and determining a second data node associated with the first data node among the data nodes contained in the distributed file system; and taking the first data node and the second data node as target data nodes.

Specifically, the file identifier refers to identification information such as a data file ID used to determine a unique data file in a distributed file system. The first data node refers to at least one data node that has an association relationship with the data file among the data nodes contained in the distributed file system. The first data node can be a master data node associated with the data file, and correspondingly, the second data node can be a replica data node associated with the data file. The number of second data node is at least one, and the target data node corresponding to the data file is composed of the first data node and the second data node.

Based on this, when determining the target data node corresponding to the tag operation information stored in the data operation table, a file identifier corresponding to the data file is determined, a first data node is determined among data nodes contained in a distributed file system according to the file identifier, and a second data node associated with the first data node is determined among the data nodes contained in the distributed file system; and the first data node and the second data node are taken as the target data nodes.

Following the previous example, in the distributed system, when storing data files, they can be stored in multiple copies. According to the file identifier of the data file, the master data node 10, as well as the replica data node 21 and the replica data node 22, corresponding to the data file, can be determined. The master data node 10, the replica data node 21, and the replica data node 22 are the target data nodes corresponding to the data file.

In conclusion, the first data node and the second data node are determined among the data nodes contained in the distributed file system according to the file identifier corresponding to the data file, and the first data node and the second data node are used as the target data node corresponding to the data file.

Furthermore, when the target data read request for the data file is received, the first data node associated with the data file is determined. When the first data node is unavailable, the data feedback from the second data node is received. The specific implementation is as follows:
receiving a target data read request; sending the target data read request to the first data node; and receiving second target data feedback from the second data node in response to the target data read request in a case where the first data node is unavailable, where the second target data is the same as first target data stored in the first data node.

Specifically, the first target data refers to target data stored in the first data node corresponding to the target data read request, and correspondingly, the second target data refers to target data stored in the second data node. The first target data is the same as the second target data, which are the same data stored separately in the first data node and the second data node.

Based on this, when receiving the target data read request for the data file, the target data read request is sent to the first data node corresponding to the data file. In a case where the first data node is unavailable, the second target data feedback from the second data node is received in response to the target data read request, where the second target data is the same as the first target data stored in the first data node.

In a specific implementation, when the data node is abnormal or down, the data operation table can fully record the data tag operation for each data interval, therefore, when executing a data replication task, the tag operation information in the execution failure status can be filtered out based on the data operation table. The data corresponding to the tag operation information in the data operation table that is in the successful execution status is replicated, and the data corresponding to the tag operation information in the data operation table that is in the failed execution status is not replicated.

Following the previous example, in the distributed system, when storing data files, they can be stored in multiple copies. According to the file identifier of the data file, the master data node 20, as well as the replica data node 21 and replica data node 22, corresponding to the data file, can be determined. The master data node 20, the replica data node 21, and the replica data node 22 are the target data nodes corresponding to the data file. When receiving a query request for order information "c" of a user C, the query request is sent to the master data node 20, the replica data node 21, and the replica data node 22 corresponding to the order information "c". In a case that the master data node 20 is down, the data corresponding to the order information "c" feedback from the replica data node 21 or the replica data node 22 is received.

In conclusion, when reading the data stored in the data file, the first target data stored in the first data node is read with priority, and when it is determined that the first data node is in an unavailable status, the second target data fed back from the second data node is received, thereby improving the success rate of the data reading, and avoiding the problem of failing to read the data due to the unavailability of the data node.

Furthermore, after storing the tag operation information into the data operation table, since there is a failure in executing the data tag operation based on the tag operation information in the data operation table, the tag operation information that fails to be executed when executing the data tag operation can be determined by periodically querying the data operation table. The specific implementation is as follows:
querying the data operation table based on a preset data operation table query cycle; determining target physical address information according to a query result, where the target physical address information is physical address information corresponding to target data block operation information whose operation status is operation failure in the data operation table; generating a data re-operation request based on the target physical address information, and sending the data re-operation request to a data node corresponding to the target data block operation information; and receiving an execution result of the data node executing the data re-operation request, and updating the data operation table based on the execution result.

Specifically, the preset data operation table query cycle refers to a query cycle preset based on the data operation table, the data operation table can be queried at a fixed interval in accordance with the query cycle, thereby determining the tag operation information being in a tagging failure status in the data operation table, and then performing the data tag operation again based on queried tag status information. The target physical address information is the physical address information corresponding to the queried tag status information. The data re-operation request is a data operation request generated based on the queried tag operation information and used to implement performing the data tag operation again based on the tag operation information being in a tagging failure status.

Based on this, when querying the data operation table, a data operation table query cycle is preset, a query result is obtained by querying the data operation table according to the preset data operation table query cycle, and target physical address information is determined according to the query result, where the target physical address information is physical address information corresponding to target data block operation information whose operation status is operation failure in the data operation table. A data re-operation request is generated according to the target physical address information, and the data re-operation request is sent to a data node corresponding to the target data block operation information. An execution result of the data node executing the data re-operation request is received, and the data operation table is updated based on the execution result.

In a specific implementation, when the data tag operation is actually performed, since the data file corresponds to a plurality of data replicas and there is a possibility that the data node is down, there may be situations where some data is tagged successfully and some data is failed to be tagged, or all data is failed to be tagged. In the scenarios, the data operation table can be queried periodically to query the data segment failed to be tagged, and the data segment failed to be tagged is re-tagged until all data blocks corresponding to the data operation table have completed the tag operation.

Following the previous example, when performing data deletion or data query operations on the data file, the data operation table is queried according to a preset query cycle of 5 minutes. The data operation table is queried every five minutes, a record whose operation status is operation failure in the data operation table: "data interval 1 - offset 1 - length 1 - tag failure" is queried, the physical address information "offset 1 - length 1" is determined, a retry request is generated, the retry request is sent to the data node corresponding to the record "data interval 1 - offset 1 - length 1 - tag failure". Then, after the data node operates on the data to be processed, the record "data interval 1 - offset 1 - length 1 - tag failure" in the data operation table is updated according to the operation result. If the execution is successful, "tag failure" is updated to "tag success"; and if the execution fails, the data operation table is not updated.

In summary, the data operation table is queried based on the preset data operation table query cycle, and then the physical address information corresponding to the target data block operation information whose operation status is operation failure is determined; and a data re-operation request is generated according to the target physical address information, and the data re-operation request is sent to the data node corresponding to the target data block operation information to complete the data tag operation of the target data block, thereby improving the success rate of the data tag operation.

Furthermore, in a case where it is determined that the data tag operation corresponding to the log information stored in the operation log is executed successfully, considering that the storage space of the operation log is limited, the corresponding log information that has being tagged successfully in the operation log can be deleted. The specific implementation is as follows:
deleting operation log information being in an execution completion status in the operation log; or, deleting the target operation log associated with a target data operation table in the operation log in a case where the target data operation table associated with the operation log completes a persistence operation.

Specifically, the target data operation table is a data operation table in which a persistence operation has been completed, and in this embodiment, the persistence operation may be a record of the tag operation information stored in the data operation table to achieve the goal of data backup, so that in a case where the data node is down, the execution status of the data node before being down is determined according to the persistent data operation table.

Based on this, when there is operation log information being in an execution completion status in the operation log, operation log information being in an execution completion status in the operation log is deleted; or, the target operation log information associated with a target data operation table in the operation log is deleted in a case where the target data operation table associated with the operation log completes a persistence operation.

In a specific implementation, the log information recorded in the operation log is arranged in accordance with an incremental serial number, and, after a persistence operation has been completed on the data operation table corresponding to the log information recorded in the operation log, the log information corresponding to the data operation table recorded in the operation log can be deleted; and, after the data tag operation is completed on the log information contained in the operation log, the log information on which the tag operation has been completed can be deleted.

Following the previous example, the operation log records log information 1, log information 2, log information 3, and other log information. Each log information has its corresponding log execution status, which is used to indicate whether the log information has been executed. When the log information 1 is in an execution completion status in the operation log, the log information 1 is detected from the operation log. It is also possible to perform a persistent operation on the log information recorded in the operation log, and generate a checkpoint corresponding to the log information, that is, recording the current log information in the operation log in the form of a snapshot, and generating a corresponding storage file. After it is determined that the persistence operation has been completed on the log information 1 and the log information 2 recorded in the operation log, the log information 1 and the log information 2 are deleted from the operation log.

As shown in FIG. 2-2, FIG. 2-2 is a schematic diagram of a data processing method provided in an embodiment of the specification. After the client receives a user's tag operation on a file, the tag operation is persistently recorded in the operation log. When the log information stored in the operation log needs to be processed, the log information is read from the operation log and converted into a tag operation of the data block contained in the data replica corresponding to the data interval. The tag operation on the data block of the data replica is sent to the corresponding data node, and the data node performs the tag operation on the data, thus completing the tag operation on the file.

In conclusion, an embodiment of the specification provides a data processing method, a tag operation instruction for a data file is received, and tag operation information associated with the tag operation instruction is stored in an operation log; a data operation table associated with the data file is updated according to the tag operation information recorded in the operation log in a case where the operation log meets a log information processing condition; a data operation request corresponding to a target data node is generated based on an updated data operation table, and the data operation request is sent to the target data node. The data operation table is updated according to the operation log, thereby determining the target data node according to the data operation table, and executing a tag operation at the target data node, which achieves collaborative processing of the data file based on the tag operation instruction.

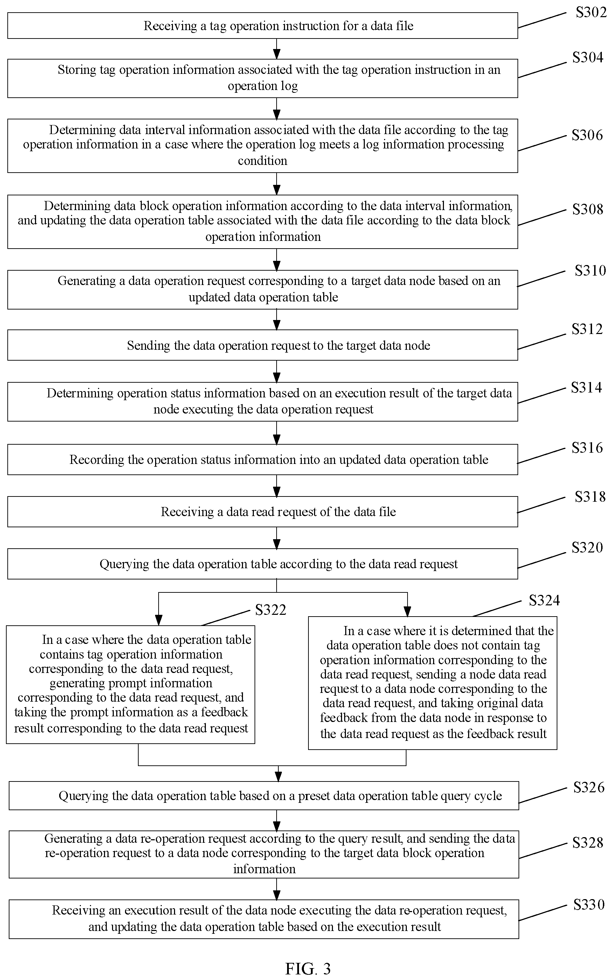

In conjunction with FIG. 3, taking the application of the data processing method provided in the specification in a distributed file system as an example, the data processing method is further explained. FIG. 3 illustrates a flowchart of a processing procedure of a data processing method provided in an embodiment of the specification, which specifically includes the following steps.

Step S302, receiving a tag operation instruction for a data file.

In a scenario of deleting user personal data, a data deletion instruction for the data file that stores user personal data is received.

Step S304, storing tag operation information associated with the tag operation instruction in an operation log.

The data interval information corresponding to the user personal data carried in the data deletion instruction is determined according to the data deletion instruction. In order to improve the security and reliability of data storage, user personal data is stored using the distributed file storage system. Therefore, the user personal data is a plurality of storage replicas, and the user personal data is stored in a plurality of data blocks corresponding to the data file. The data block is managed by the data node, and one data node can manage a plurality of data blocks. The data interval information corresponding to the user personal data is stored in the operation log corresponding to the data file.

Step S306, determining data interval information associated with the data file according to the tag operation information in a case where the operation log meets a log information processing condition.

When the number of log information stored in the operation log reaches the set threshold, or when new log information is added to the operation log, it can be confirmed that the operation log meets the log information processing condition, and then the data interval in which the user personal data is stored can be determined according to the log information stored in the operation log.

Step S308, determining data block operation information according to the data interval information, and updating the data operation table associated with the data file according to the data block operation information.

The log information stored in the operation log is read, the recording of the data operation table is completed according to the data interval information corresponding to the log information, data block ID, offset offset, length length, and processing status contained in the data interval information are recorded in the data operation table, and the processing status is null when the data in the data operation table is not processed.

Step S310, generating a data operation request corresponding to a target data node based on an updated data operation table.

The tag operation information such as the data interval ID, the offset offset, the length length, etc. stored in the data operation table is read, and a data operation request for the user personal data is generated according to the tag operation information.

Step S312, sending the data operation request to the target data node.

The data operation request is sent to a data node corresponding to a data block in a data interval in which the user personal data is stored, and the data node performs a tag operation on the user personal data.

Step S314, determining operation status information based on an execution result of the target data node executing the data operation request.

The tag operation is performed on the user personal data stored in the data node by the determined data node, and in a case where the tag operation is successful, it is determined that the execution result is an execution success, and in a case where the tag operation fails, it is determined that the execution result is an execution failure.

Step S316, recording the operation status information into an updated data operation table.

In a case where the execution result is execution success, the status information in the corresponding tagged operation information in the data operation table is updated to execution success; and in the case where the tagged operation fails, the status information in the corresponding tagged operation information in the data operation table is updated to execution failure.

Step S318, receiving a data read request of the data file.

In a scenario of reading user personal data, a data read request for the data file that stores user personal data is received.

Step S320, querying the data operation table according to the data read request.

Step S322, in a case where the data operation table contains tag operation information corresponding to the data read request, generating prompt information corresponding to the data read request, and taking the prompt information as a feedback result corresponding to the data read request.

When it is determined that the data operation table contains the tag operation information corresponding to the data read request, it indicates that the tag operation for the user personal data in the data file corresponding to this tag operation information has been recorded in the operation log in the form of log information, and on this basis, the tag operation corresponding to this data can be considered to have been successful. When the data read request is received, since the data operation table contains tag operation information corresponding to the data read request, it can be determined that the user personal data to be read is in an unreadable status, and therefore, prompt information indicating unreadability such as "reading failure" or "0" is fed back.

Step S324, in a case where it is determined that the data operation table does not contain tag operation information corresponding to the data read request, sending a node data read request to a data node corresponding to the data read request, and taking original data, feedback from the data node in response to the data read request, as the feedback result.

In a case where it is determined that the data operation table does not contain the tag operation information corresponding to the data read request, it indicates that the log information corresponding to the tag operation information is not recorded in the operation log, i.e., the user personal data to be read corresponding to the data read request has not been tagged successfully and is in a readable status, and therefore the data read request may be sent to the data node in which the user personal data to be read is stored, and the data node feeds back the user personal data stored in the data node.

Step S326, querying the data operation table based on a preset data operation table query cycle.

Since there is tag operation information that is in an operation failure status in the data operation table, it is also necessary to perform the tag operation again for the tag operation information that is in an operation failure status. The tag operation information that is in an operation failure status can be determined through querying the data operation table.

Step S328, generating a data re-operation request according to the query result, and sending the data re-operation request to a data node corresponding to the target data block operation information.

When it is queried that there is tag operation information being in a tagging failure status in the data operation table, a data re-operation request is generated according to the tag operation information, and the data re-operation request is sent to the data node.

Step S330, receiving an execution result of the data node executing the data re-operation request, and updating the data operation table based on the execution result.

When the data node receives the data re-operation request, the tag operation for the user personal data stored in the data node is performed again, and the tag operation information in the data operation table is updated according to the obtained tag result, i.e., if the operation is successful, the status information in the tag operation information in the data operation table will be updated to operation success, and if the operation fails, the data operation table will not be processed. Until the operation statuses corresponding to all tag operation information in the data operation table are in the execution success status.

In conclusion, a tag operation instruction for a data file is received, and tag operation information associated with the tag operation instruction is stored in an operation log; a data operation table associated with the data file is updated according to the tag operation information recorded in the operation log in a case where the operation log meets a log information processing condition; a data operation request corresponding to a target data node is generated based on an updated data operation table, and the data operation request is sent to the target data node. The data operation table is updated according to the operation log, thereby determining the target data node according to the data operation table, and executing a tag operation at the target data node, which achieves collaborative processing of the data file based on the tag operation instruction.

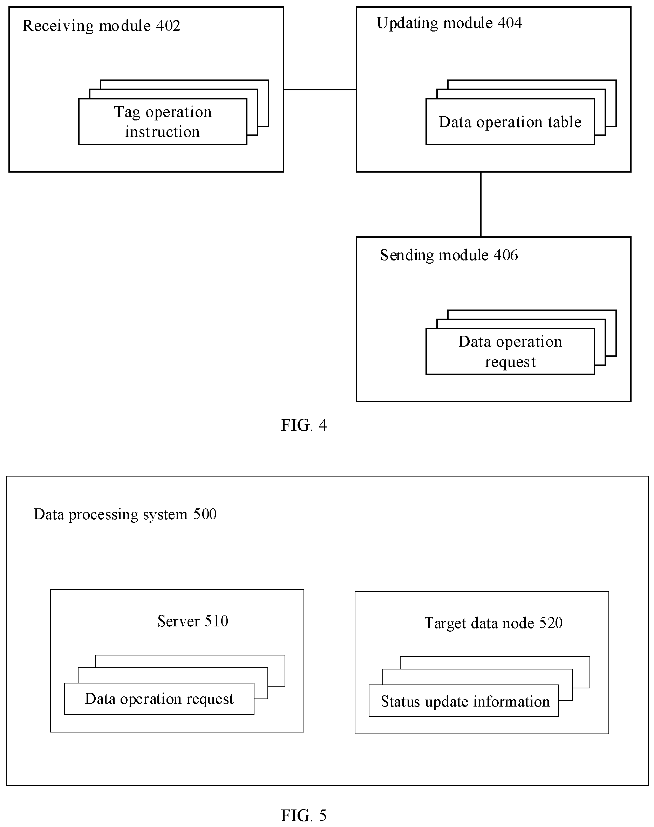

Corresponding to the above method embodiments, the specification also provides an embodiment of a data processing apparatus. FIG. 4 illustrates a schematic structural diagram of a data processing apparatus provided in an embodiment of the specification. As shown in FIG. 4, the apparatus includes:
a receiving module 402, configured to receive a tag operation instruction for a data file, and store tag operation information associated with the tag operation instruction in an operation log;
an updating module 404, configured to update a data operation table associated with the data file according to the tag operation information recorded in the operation log in a case where the operation log meets a log information processing condition;
a sending module 406, configured to generate a data operation request corresponding to a target data node based on an updated data operation table, and send the data operation request to the target data node.

In an optional embodiment, the updating module 404 is further configured to:
read the tag operation information recorded in the operation log, and determine data interval information associated with the data file according to the tag operation information, where the data interval information is associated with a data interval contained in the data file;
determine data block operation information according to the data interval information, and update the data operation table associated with the data file according to the data block operation information.

In an optional embodiment, the sending module 406 is further configured to:
read the data block operation information from the updated data table;
generate the data operation request corresponding to the target data node according to the physical address information contained in the data block operation information, where the data operation request is associated with a data block of the data file, and the data block is stored in the target data node.

In an optional embodiment, the receiving module 402 is further configured to:
store the tag operation information associated with the tag operation instruction in an operation log associated with the data file, where the operation log is created according to a historical operation instruction of the data file; or,
use a target operation log associated with the data file as the operation log, and store the tag operation information associated with the tag operation instruction in the operation log, where the target operation log is used to store tag operation information associated with at least two data files.

In an optional embodiment, the updating module 404 is further configured to:
in a case where the tag operation information is newly added to the operation log, determine that the operation log meets the log information processing condition, and performing a step of updating the data operation table associated with the data file according to the tag operation information recorded in the operation log; or,
query log information contained in the operation log according to a preset log query cycle, in a case where it is determined, according to a query result, that the tag operation information is a newly added tag operation information, determine that the operation log meets the log information processing condition, and perform a step of updating the data operation table associated with the data file according to the tag operation information recorded in the operation log.

In an optional embodiment, the sending module 406 is further configured to:
determine operation status information based on an execution result of the target data node executing the data operation request, and record the operation status information in the updated data operation table.

In an optional embodiment, the recording module 406 is further configured to:
receive a data read request of the data file;
query the data operation table based on the data read request;
determine a feedback result corresponding to the data read request according to a query result.

In an optional embodiment, the recording module 406 is further configured to:
in a case where it is determined, according to the query result, that the data operation table contains tag operation information corresponding to the data read request, generate prompt information and taking the prompt information as the feedback result, where the prompt information indicates that data to be read corresponding to the data read request is in an unreadable status;
in a case where it is determined, according to the query result, that the data operation table does not contain tag operation information corresponding to the data read request, send a node data read request to a data node corresponding to the data read request, and take original data feedback from the data node in response to the data read request as the feedback result.

In an optional embodiment, the sending module 406 is further configured to:
determine a file identifier corresponding to the data file, determine a first data node among data nodes contained in a distributed file system according to the file identifier, and determine a second data node associated with the first data node among the data nodes contained in the distributed file system;
take the first data node and the second data node as target data nodes.

In an optional embodiment, the recording module 406 is further configured to:
receive a target data read request;
send the target data read request to the first data node;
receive second target data feedback from the second data node in response to the target data read request in a case where the first data node is unavailable, where the second target data is the same as first target data stored in the first data node.

In an optional embodiment, the recording module 406 is further configured to:
query the data operation table based on a preset data operation table query cycle;
determine target physical address information according to a query result, where the target physical address information is physical address information corresponding to target data block operation information whose operation status is operation failure in the data operation table;
generate a data re-operation request based on the target physical address information, and send the data re-operation request to a data node corresponding to the target data block operation information;
receive an execution result of the data node executing the data re-operation request, and update the data operation table based on the execution result.

In an optional embodiment, the recording module 406 is further configured to:
delete operation log information being in an execution completion status in the operation log; or,
delete the target operation log associated with a target data operation table in the operation log in a case where the target data operation table associated with the operation log completes a persistence operation.

In an embodiment of the specification provides a data processing apparatus, where a tag operation instruction for a data file is received, and tag operation information associated with the tag operation instruction is stored in an operation log; a data operation table associated with the data file is updated according to the tag operation information recorded in the operation log in a case where the operation log meets a log information processing condition; a data operation request corresponding to a target data node is generated based on an updated data operation table, and the data operation request is sent to the target data node. The data operation table is updated according to the operation log, thereby determining the target data node according to the data operation table, and executing a tag operation at the target data node, which achieves collaborative processing of the data file based on the tag operation instruction.

The above is the schematic scheme of the data processing apparatus in this embodiment. It should be noted that the technical solution of the data processing apparatus belongs to the same concept as the technical solution of the data processing method mentioned above. For contents not described in detail in the technical solution of the data processing apparatus, please refer to the description of the technical solution of the data processing method mentioned above.

Corresponding to the above method embodiments, the specification also provides an embodiment of a data processing system. FIG. 5 illustrates a schematic structural diagram of a data processing system provided in an embodiment of the specification. As shown in FIG. 5, the data processing system 500 includes: a server 510, and a target data node 520;
where a server 510 is configured to receive a tag operation instruction for a data file, and store tag operation information associated with the tag operation instruction in an operation log; update a data operation table associated with the data file according to the tag operation information recorded in the operation log in a case where the operation log meets a log information processing condition; generate a data operation request corresponding to the target data node 520 based on an updated data operation table, and send the data operation request to the target data node 520;
the target data node 520 is configured to tag a data interval to be operated in a local storage space based on the data operation request, and generate status update information based on the tagging result and send the status update information to the server 510;
the server 510 is further configured to receive the operation status information and record the operation status information into the updated data operation table.

Based on this, the server receives a tag operation instruction for a data file, stores tag operation information associated with the tag operation instruction in an operation log, updates a data operation table associated with the data file according to the tag operation information recorded in the operation log in a case where the operation log meets a log information processing condition. And the server generates a data operation request corresponding to a target data node 520 based on an updated data operation table, and sends the data operation request to the target data node 520. The target data node 520 is configured to tag a data interval to be operated in a local storage space based on the data operation request, and generate status update information based on the tagging result and send the status update information to the server 510. The server 510 receives operation status information, and records it in the updated data operation table, where the data interval to be operated is a data interval to be deleted in the data node.

An embodiment of the specification provides a data processing system, where a tag operation instruction for a data file is received, and tag operation information associated with the tag operation instruction is stored in an operation log; a data operation table associated with the data file is updated according to the tag operation information recorded in the operation log in a case where the operation log meets a log information processing condition; a data operation request corresponding to a target data node is generated based on an updated data operation table, and the data operation request is sent to the target data node. The data operation table is updated according to the operation log, thereby determining the target data node according to the data operation table, and executing a tag operation at the target data node, which achieves collaborative processing of the data file based on the tag operation instruction.

The above is the schematic solution of the data processing system of this embodiment. It should be noted that the technical solution of the data processing system belongs to the same concept as the technical solution of the data processing method mentioned above. For contents not described in detail in the technical solution of the data processing system, please refer to the description of the technical solution of the data processing method mentioned above.

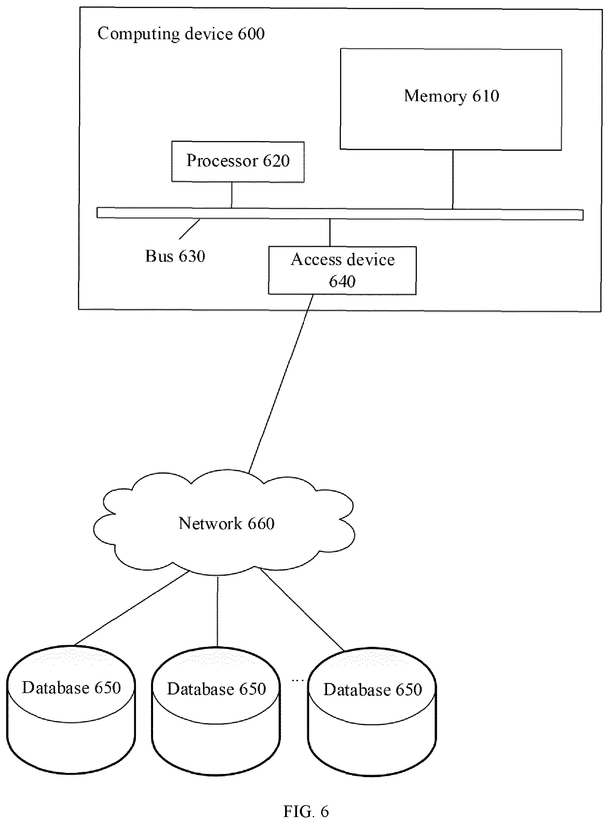

FIG. 6 illustrates a structural block diagram of a computing device 600 provided according to an embodiment of the specification. Components of the computing device 600 include but are not limited to a memory 610 and a processor 620. The processor 620 is connected to the memory 610 through a bus 630, and a database 650 is used to store data.

The computing device 600 also includes an access device 640, and the access device 640 enables the computing device 600 to perform communication via one or more networks 660. Examples of these networks include a public switched telephone network (PSTN), a local area network (LAN), a wide area network (WAN), a personal area network (PAN), or a combination of communication networks such as Internet. The access device 640 may include one or more of any types of wired or wireless network interfaces (e.g., network interface card (NIC)), such as an IEEE 802.11 wireless local area network (WLAN) wireless interface, a global microwave internet access (Wi-MAX) interface, an Ethernet interface, a universal serial bus (USB) interface, a cellular network interface, a Bluetooth interface, a near field communication (NFC) interface, and so on.

In an embodiment of the specification, the above components of the computing device 600 and other components not shown in FIG. 6 may also be connected to each other, such as through the bus. It should be understood that the structure diagram of the computing device shown in FIG. 6 is for illustrative purposes only and not to limit the scope of the specification. Those skilled in the art can add or replace other components as needed.

The computing device 600 can be any type of stationary or mobile computing device, which includes a mobile computer or a mobile computing device (such as a tablet computer, a personal digital assistant, a laptop computer, a netbook computer, netbook, etc.), a mobile phone (such as a smartphone), a wearable computing device (such as a smart watch, a smart glass, etc.), or other types of mobile devices, stationary computing devices such as a desktop computer or of PC. The computing device 600 can also be a mobile or stationary server.

The processor 620 is used to execute the following computer executable instructions which, when executed by the processor, implement steps of the data processing method described above.

The above is a schematic scheme of the computing device in this embodiment. It should be noted that the technical solution of the computing device belongs to the same concept as the technical solution of the data processing method mentioned above. For contents not described in detail in the technical solution of the computing device, please refer to the description of the technical solution of the data processing method mentioned above.

An embodiment of the specification also provides a computer readable storage medium storing computer executable instructions which, when executed by a processor, implement steps of the data processing method described above.

The above is a schematic scheme of the computer readable storage medium in this embodiment. It should be noted that the technical solution of the storage medium belongs to the same concept as the technical solution of the data processing method mentioned above. For contents not described in detail in the technical solution of the storage medium, please refer to the description of the technical solution of the data processing method mentioned above.

An embodiment of the specification also provides a computer program which, when executed by a computer, causes the computer to execute steps of the data processing method described above.

The above is a schematic scheme of the computer program in this embodiment. It should be noted that the technical solution of the computer program belongs to the same concept as the technical solution of the data processing method mentioned above. For contents not described in detail in the technical solution of the computer program, please refer to the description of the technical solution of the data processing method mentioned above.

The specific embodiments of the specification have been described above. Other embodiments are within the scope of the appended claims. In some cases, actions or steps described in the claims may be performed in a different order than those in the embodiments and still achieve the desired results. In addition, the processes depicted in the drawings do not necessarily require a specific or continuous order to achieve the desired results. In some implementations, multitasking and parallel processing are also possible or may be advantageous.

The computer instructions include computer program codes which can be in the form of source codes, object codes, an executable file, or in some intermediate forms. The computer readable medium may include any entity or apparatus capable of carrying the computer program codes, a recording medium, a USB flash disk, a mobile hard disk drive, a diskette, a compact disc, a computer memory, a read-only memory (ROM, Read-Only Memory), a random access memory (RAM, Random Access Memory), an electric carrier signal, a telecommunication signal, and a software distribution medium. It should be noted that the content contained in the computer readable medium may be appropriately added or removed according to requirements of legislation and patent practice within the jurisdiction. For example, in some jurisdictions, according to the legislation and the patent practice, the computer readable media dos not include a carrier signal and a telecommunication signal.

It should be noted that for the sake of simplicity, the aforementioned method embodiments are described as a series of action combinations. However, those skilled in the art should be aware that the embodiments in the specification are not limited by the order of actions described, as certain steps may be performed in other orders or simultaneously according to the embodiments in the specification. Secondly, those skilled in the art should also be aware that the embodiments described in the specification are all preferred embodiments, and the actions and the modules involved may not necessary for the embodiments in the specification.

In the above embodiments, the description of each embodiment has its own emphasis. For the parts that are not detailed in an embodiment, please refer to relevant descriptions of other embodiments.

The preferred embodiments of the description disclosed above are only intended to assist in illustrating the specification. The optional embodiments do not provide a detailed description of all the details, nor do they limit the present invention to only specific implementations described. Obviously, many modifications and changes can be made based on the content of the embodiments in the specification. The specification selects and specifically describes these embodiments to better explain principles and practical applications of the embodiments in the specification, so that those skilled in the art can understand and utilize the specification well. The specification is limited only by the claims and the full scope and equivalents thereof.

## Claims

1. A data processing method, applied to a server, comprising:
receiving a tag operation instruction for a data file, and storing tag operation information associated with the tag operation instruction in an operation log;
updating a data operation table associated with the data file according to the tag operation information recorded in the operation log in a case where the operation log meets a log information processing condition;
generating a data operation request corresponding to a target data node based on an updated data operation table, and sending the data operation request to the target data node.

2. The method according to claim 1, wherein the updating the data operation table associated with the data file according to the tag operation information recorded in the operation log comprises:
reading the tag operation information recorded in the operation log, and determining data interval information associated with the data file according to the tag operation information, wherein the data interval information is associated with a data interval contained in the data file;
determining data block operation information according to the data interval information, and updating the data operation table associated with the data file according to the data block operation information.

3. The method according to claim 2, wherein the generating the data operation request corresponding to the target data node based on the updated data operation table comprises:
reading the data block operation information from the updated data table;
generating the data operation request corresponding to the target data node according to the physical address information contained in the data block operation information, wherein the data operation request is associated with a data block of the data file, and the data block is stored in the target data node.

4. The method according to claim 1, wherein the storing the tag operation information associated with the tag operation instruction in the operation log comprises:
storing the tag operation information associated with the tag operation instruction in an operation log associated with the data file, wherein the operation log is created according to a historical operation instruction of the data file; or,
using a target operation log associated with the data file as the operation log, and storing the tag operation information associated with the tag operation instruction in the operation log, wherein the target operation log is used to store tag operation information associated with at least two data files.

5. The method according to claim 1, wherein the updating the data operation table associated with the data file according to the tag operation information recorded in the operation log in a case where the operation log meets the log information processing condition comprises:
in a case where the tag operation information is newly added to the operation log, determining that the operation log meets the log information processing condition, and performing a step of updating the data operation table associated with the data file according to the tag operation information recorded in the operation log; or,
querying log information contained in the operation log according to a preset log query cycle, in a case where it is determined, according to a query result, that the tag operation information is a newly added tag operation information, determining that the operation log meets the log information processing condition, and performing a step of updating the data operation table associated with the data file according to the tag operation information recorded in the operation log.

6. The method according to claim 1, after performing the step of sending the data operation request to the target data node, further comprising:
determining operation status information based on an execution result of the target data node executing the data operation request, and recording the operation status information in the updated data operation table.

7. The method according to claim 6, further comprising:
receiving a data read request of the data file;
querying the data operation table based on the data read request;
determining a feedback result corresponding to the data read request according to a query result.

8. The method according to claim 7, wherein the determining the feedback result corresponding to the data read request according to the query result comprises:
in a case where it is determined, according to the query result, that the data operation table contains tag operation information corresponding to the data read request, generating prompt information and taking the prompt information as the feedback result, wherein the prompt information indicates that data to be read corresponding to the data read request is in an unreadable status;
in a case where it is determined, according to the query result, that the data operation table does not contain tag operation information corresponding to the data read request, sending a node data read request to a data node corresponding to the data read request, and taking original data feedback from the data node in response to the data read request as the feedback result.

9. The method according to claim 1, determination of the target data node comprises:
determining a file identifier corresponding to the data file, determining a first data node among data nodes contained in a distributed file system according to the file identifier, and determining a second data node associated with the first data node among the data nodes contained in the distributed file system;
taking the first data node and the second data node as target data nodes.

10. The method according to claim 9, further comprising:
receiving a target data read request;
sending the target data read request to the first data node;
receiving second target data feedback from the second data node in response to the target data read request in a case where the first data node is unavailable, wherein the second target data is the same as first target data stored in the first data node.

11. The method according to claim 6, further comprising:
querying the data operation table based on a preset data operation table query cycle;
determining target physical address information according to a query result, wherein the target physical address information is physical address information corresponding to target data block operation information whose operation status is operation failure in the data operation table;
generating a data re-operation request based on the target physical address information, and sending the data re-operation request to a data node corresponding to the target data block operation information;
receiving an execution result of the data node executing the data re-operation request, and updating the data operation table based on the execution result.

12. A data processing system, comprising:
a server, configured to receive a tag operation instruction for a data file, and store tag operation information associated with the tag operation instruction in an operation log; update a data operation table associated with the data file according to the tag operation information recorded in the operation log in a case where the operation log meets a log information processing condition; generate a data operation request corresponding to a target data node based on an updated data operation table, and send the data operation request to the target data node;
the target data node, configured to tag a data interval to be operated in a local storage space based on the data operation request, and generate status update information based on the tagging result and send the status update information to the server;
wherein the server is further configured to receive the operation status information and record the operation status information into the updated data operation table.

13. A computing device, comprising:
a memory and a processor;
wherein the memory is configured to store computer executable instructions, and the processor is configured to execute the computer executable instructions which, when executed by the processor, implement steps of the data processing method according to any one of claims 1-11.

14. A computer readable storage medium, storing computer executable instructions which, when executed by a processor, implement steps of the data processing method according to any one of claims 1-11.
